# EUROPEAN PATENT APPLICATION

(11) **EP 4 617 641 A1**
(43) Date of publication of application: **17.09.2025**
(21) Application number: 23887947.2
(22) Date of filing: 06.11.2023
(51) Int. Cl.: G01N 21/31

(54) **SPECTROPHOTOMETER, CLEANING UNIT, AND METHOD FOR CLEANING SPECTROPHOTOMETER**

(30) Priority: 08.11.2022 CN 202211389982
(71) Applicant: Thermo Fisher Scientific (Shanghai) Instruments Co., Ltd., Shanghai 201206 (CN)
(72) Inventor: LI, Yong, Shanghai 201206 (CN); QIN, Laigui, Shanghai 201206 (CN); CHU, Bo, Shanghai 201206 (CN)
(74) Representative: Boult Wade Tennant LLP
(86) International application number: PCT/CN2023/129889
(87) International publication number: WO 2024/099257

(57) **Abstract**

A spectrophotometer (100), a cleaning unit (120), and a method for cleaning a spectrophotometer (100). The spectrophotometer comprises: a measurement unit (110), which comprises a pair of detection components (112, 114); a cleaning unit (120), which comprises an injection mechanism and a discharge mechanism; and a closed cleaning chamber (121), wherein walls for bounding the cleaning chamber (121) can be formed by the pair of detection components (112, 114) and the cleaning unit (120), and the pair of detection components (112, 114) are cleaned in the cleaning chamber (121). The discharge mechanism is configured to discharge a cleaning agent from the cleaning chamber (121) when the injection mechanism injects the cleaning agent into the cleaning chamber (121). Therefore, the risk of leakage of the cleaning agent from the cleaning chamber (121) can be reduced or avoided.

## Description

### Technical Field

The present invention belongs to the field of spectrophotometers, and in particular to the field of micro-spectrophotometers. Specifically, firstly, the present invention relates to a spectrophotometer including a cleaning unit. Secondly, the present invention further relates to a cleaning unit which can be used for a spectrophotometer. In addition, the present invention further relates to a method for cleaning a spectrophotometer, mainly a method for cleaning a detection component of the spectrophotometer by means of a cleaning unit.

### Background Art

Spectrophotometry is a method for qualitative and quantitative analysis of a substance by measuring the absorbance of light at a specific wavelength or within a certain wavelength range. Spectrophotometry has the advantages of high sensitivity, simple and rapid operation, etc., is the most commonly used experimental method in biochemical experiments, and is widely used in the rapid quantitative measurement of samples such as sugars, nucleic acids, enzymes or proteins.

In a spectrophotometer (also referred to as a spectrometer) based on spectrophotometry, a light source that can generate multiple wavelengths is used, by means of a series of optical splitters, so as to generate a light source of a specific wavelength. After light rays pass through a test sample, part of the light rays are absorbed, and the absorbance value of the sample is calculated and is converted into the concentration of the sample. The absorbance value of the sample is directly proportional to the concentration of the sample. At present, in addition to the field of biochemical experiments, spectrophotometers are also widely used in the field of water quality analysis, such as in online water quality analyzers. With the aid of a spectrophotometer, content determination and quantitative and qualitative analysis for contaminants in surface water, domestic sewage, industrial wastewater, etc. can be performed. The testing process is quick and convenient, and the test results are reliable.

In a traditional spectrophotometer, the container for holding a test sample is a cuvette. However, the cuvette is generally large in capacity, so that during the spectrophotometric assay on a test sample, a large amount of the test sample may be required. In particular, when the test samples (e.g., nucleic acids and proteins) are precious, it is possible to cause unnecessary waste and a significant increase in the testing cost. In addition, when testing different samples, the cuvette needs to be thoroughly cleaned, which may also reduce the efficiency of experiment and increase the operating cost.

At present, samples are mostly tested using a so-called micro-spectrophotometer. The micro-spectrophotometers mainly use the tension traction of a small amount of liquid to form an optical path, so that only a trace amount of test sample is needed to obtain accurate test data. For example, in a micro-spectrophotometer, a test sample is bridged between an upper measurement platform and a lower measurement platform which are vertically opposed to each other and have a certain gap. Since the test sample has a certain surface tension, the bridged test sample will not be discontinuous. The measuring light emitted by a transmitting optical fiber disposed on the upper measurement platform passes through the test liquid sample, is received by the receiving optical fiber disposed on the lower measurement platform, and then enters a measurement mechanism for measurement.

In order to clean a detection component in a spectrophotometer, such as an optical fiber probe in a micro-spectrophotometer, an operator often manually and directly wipes the detection component with a wiping component, such as a light brush or a wet wipe. Repeated friction on the detection component (e.g., the optical fiber probe) due to the method of cleaning by the wiping may cause damage to the detection component. Even if the operator operates gently, such damage to the surface of the detection component is inevitable, especially during frequent daily cleaning.

In addition, the detection component, especially the optical fiber probe, may also have a small amount of contaminants or sample residues due to limitations of the wiping component, such as incomplete cleaning of the brush or wet wipe. Existing evidence has shown that, for example, when the test sample is a low-concentration liquid, a trace amount of residues on the surface of the detection component, especially on the surface of the optical fiber probe, will directly affect the testing accuracy of the spectrophotometer and the repeatability of the experiment.

Therefore, in the field of spectrophotometers, especially micro-spectrophotometers, there is always a need to thoroughly clean a detection component, especially an optical fiber probe, in a way that is less damaging to the detection component and is efficient.

### Summary of the Invention

The present invention relates to a spectrophotometer, which comprises: a measurement unit, which may include a pair of detection components; a cleaning unit, which may include an injection mechanism and a discharge mechanism; and a closed cleaning chamber, wherein a wall bounding the cleaning chamber may be formed by the pair of detection components and the cleaning unit, and the pair of detection components may be cleaned in the cleaning chamber; and the discharge mechanism may be configured to discharge a cleaning agent from the cleaning chamber when the injection mechanism injects the cleaning agent into the cleaning chamber.

In the spectrophotometer according to the present invention, the cleaning unit and the detection components of the measurement unit can be used to form (the wall of) the closed cleaning chamber, and in particular, by discharging the cleaning agent from the cleaning chamber when the cleaning agent is injected into the closed cleaning chamber, the risk of the cleaning agent leaking from the cleaning chamber can be reduced or avoided, so as to reduce any adverse effect of the cleaning operation on the spectrophotometer while effectively cleaning the detection components.

Advantageously, the injection mechanism may include a first cleaning component, and the discharge mechanism may include a second cleaning component. The spectrophotometer may have a cleaning configuration in which the first cleaning component and the second cleaning component can move to a position for forming the cleaning chamber.

Since the injection mechanism and the discharge mechanism form separate cleaning components, it is possible to conveniently move the cleaning components to the position in which the cleaning chamber is formed, namely a cleaning position, when cleaning is required. This increases the flexibility of arrangement, and does not hinder other configurations, such as testing configuration, of the spectrophotometer.

Preferably, the first cleaning component and the second cleaning component may include a flexible portion, respectively, which can engage to at least a portion of an outer surface of each of the pair of detection components and may form a portion of the wall bounding the cleaning chamber.

The flexible portion is arranged to engage with the outer surface of the detection component, so that the flexible portion can better engage with (e.g., better "hold tightly") at least a portion of the outer surface of each of the pair of detection components, thereby achieving good sealing of the cleaning chamber.

In particular, the flexible portion of the first cleaning component may be provided with an injection port which can be in fluid communication with the cleaning chamber, and the flexible portion of the second cleaning component may be provided with a discharge port which can be in fluid communication with the cleaning chamber.

The injection port and the discharge port are respectively disposed on the flexible portions, which can make the overall structure compact (without the need for additional components to provide the injection port and the discharge port), and can also improve the flexibility of arrangement of the injection mechanism and the discharge mechanism.

More preferably, the injection port and the discharge port may be arranged oppositely with respect to the cleaning chamber, and/or the pair of detection components may be arranged oppositely with respect to the cleaning chamber.

The oppositely arranged detection components can facilitate the overall operation of the spectrophotometer. For example, in the case of testing configuration and cleaning configuration, the spectrophotometer can enter the corresponding configuration through relative movement of the detection components. The relative arrangement of the injection port and the discharge port can facilitate the flow path design of the injection mechanism and the discharge mechanism, making the overall structure more compact and reducing mutual interference. In addition, the relative arrangement of the injection port and the discharge port also facilitates the flow of the cleaning agent or other substances in the cleaning chamber to improve the cleaning power.

In addition, the first cleaning component may further include: an injection pipe, which extends into the cleaning chamber via the injection port, and through which the cleaning agent can flow into the cleaning chamber.

Using a separate injection pipe is advantageous in that the cleaning agent can flush, wash, clean, etc. the detection component to be cleaned in a manner closer to the location of the detection component to be cleaned.

Advantageously, the discharge mechanism may be configured such that a suction speed from the cleaning chamber is greater than an injection speed of the cleaning agent into the cleaning chamber by the injection mechanism.

The suction speed being greater than the injection speed can effectively reduce the leakage of the cleaning agent from the closed cleaning chamber, thereby reducing the adverse effects of cleaning on the spectrophotometer.

In particular, the suction speed may be two to five times the injection speed. This speed difference can effectively prevent the cleaning agent from accumulating in the cleaning chamber and thus prevent the cleaning agent from leaking to other locations in the spectrophotometer.

In addition, the cleaning unit may include a gas supply mechanism, which may be configured to supply, to the cleaning chamber, gas for drying the pair of detection components.

By providing the blow-dry gas to the detection components, the detection components can quickly enter a state capable of performing testing after being cleaned with the cleaning agent, thereby effectively improving the cleaning efficiency.

In some specific examples, the pair of detection components may include an optical fiber transmitting probe and an optical fiber receiving probe, and in the cleaning configuration, at least one of the optical fiber receiving probe and the optical fiber transmitting probe can move to a position for forming the cleaning chamber.

By moving at least one of the optical fiber receiving probe and the optical fiber transmitting probe to reach a position for forming the cleaning chamber, the flexibility of arrangement of the detection components can be improved, and the detection components themselves can be used to form a portion (of the wall) of the closed cleaning chamber.

In particular, the pair of detection components may be arranged substantially vertically, and the first cleaning component and the second cleaning component may be arranged substantially horizontally and engage with the pair of detection components from the sides.

By arranging the detection components vertically, the tension of droplets can be effectively used to form a sample column, while the vertical direction is maintained unchanged to enter the cleaning configuration. The horizontal arrangement of the cleaning components facilitates the enclosing of the pair of detection components from the sides, which facilitates quickly entering the cleaning configuration of the spectrophotometer from the separated state of the first cleaning component and the second cleaning component.

In addition, the present invention further provides a cleaning unit for a spectrophotometer. The spectrophotometer may include a measurement unit which may include pair of detection components, the cleaning unit may include an injection mechanism and a discharge mechanism, the cleaning unit and the pair of detection components may form a closed cleaning chamber to enable the pair of detection components to be cleaned in the cleaning chamber. The discharge mechanism may be configured to discharge a cleaning agent from the cleaning chamber when the cleaning agent is injected into the cleaning chamber by the injection mechanism.

With the aid of the cleaning unit of the present invention, by discharging the cleaning agent from the cleaning chamber when the cleaning agent is injected into the closed cleaning chamber, the risk of the cleaning agent leaking from the cleaning chamber can be reduced or avoided, so as to reduce any adverse effect of the cleaning operation on the spectrophotometer while effectively cleaning the detection components.

In addition, the present invention further provides a method for cleaning a spectrophotometer which may include a measurement unit and a cleaning unit, the measurement unit including pair of detection components. The method includes: moving the cleaning unit to a cleaning position in which the cleaning unit can form a closed cleaning chamber with the pair of detection components, so that the pair of detection components can be cleaned in the cleaning chamber; and discharging a cleaning agent from the cleaning chamber when the cleaning agent is injected into the cleaning chamber.

The cleaning method according to the present invention can reduce or avoid the risk of the cleaning agent leaking from the cleaning chamber, so as to reduce any adverse effect of the cleaning operation on the spectrophotometer while effectively cleaning the detection components.

Preferably, the method further includes: after the injection of the cleaning agent into the cleaning chamber is stopped, supplying gas into the cleaning chamber to dry the pair of detection components.

By providing the blow-dry gas, the detection components can quickly enter a state capable of performing testing after being cleaned with the cleaning agent, thereby effectively improving the cleaning efficiency.

More preferably, the method further includes: before the injection of the cleaning agent into the cleaning chamber, moving at least one of the pair of detection components to a position for forming the cleaning chamber.

By moving at least one of the pair of detection components to reach a position for forming the cleaning chamber, the flexibility of arrangement of the detection components can be improved.

### Brief Description of the Drawings

FIG. 1 exemplarily shows a perspective view of an embodiment of a spectrophotometer according to the present invention, in which a first cleaning component and a second cleaning component have not yet entered a cleaning position;
FIG. 2 exemplarily shows a perspective view of an embodiment of a spectrophotometer according to the present invention, in which a first cleaning component and a second cleaning component are inserted into a supporting portion;
FIG. 3 exemplarily shows a perspective view of an embodiment of a spectrophotometer according to the present invention, in which the spectrophotometer is in a cleaning configuration;
FIG. 4 exemplarily shows a cross-sectional view of an embodiment of a spectrophotometer according to the present invention, in which detection components and a cleaning unit form a wall of a cleaning chamber; and
FIG. 5 exemplarily shows a principle diagram of an embodiment of a cleaning unit according to the present invention, showing a portion of an injection mechanism and a discharge mechanism of the cleaning unit.

List of reference numerals:
- 100: Spectrophotometer
- 110: Measurement unit
- 112: First detection component
- 114: Second detection component
- 116: Optical fiber
- 118: Optical fiber jacket
- 120: Cleaning unit
- 121: Cleaning chamber
- 122: First cleaning component
- 122a: Flexible portion (of first cleaning component)
- 122b: Supporting portion (of the first cleaning component)
- 123: Second cleaning component
- 123a: Flexible portion (of second cleaning component)
- 123b: Supporting portion (of second cleaning component)
- 124a: Injection pipe
- 124b: Discharge port
- 125a: Injection line
- 125b: Discharge line
- 126a: Heating device

- 126b: Filter device
- 127a: Cleaning agent storage container
- 127b: Waste storage container
- 127c: Quantitative container
- 128: Motor
- 129: Cylinder.

### Detailed Description of Embodiments

In the present invention, a spectrophotometer refers to an apparatus or instrument that measures the absorbance of a test substance (e.g., a sample solution) within a certain wavelength range to perform qualitative and quantitative analysis of the test substance (e.g., analysis of the concentration of a substance in the sample solution), and may also be referred to as a spectrometer. The present invention encompasses various types of spectrophotometers, including but not limited to micro-spectrophotometers. Preferably, the present invention relates to ultraviolet/visible light microplate spectrophotometers capable of performing DNA, RNA and protein analysis and turbidity measurement.

In the present invention, the expression "a device or component for use in a spectrophotometer" may mean that a device or component is part of a spectrophotometer, for example, a spectrophotometer including a device or component is available as a whole from the market. However, the device or component may not be part of the spectrophotometer, for example, may be separately provided and available from the market. In addition, the expression "for use in a spectrophotometer" means that it can be mainly used in a spectrophotometer, but is not limited to being used only in a spectrophotometer. For example, it can be used in an instrument or equipment in the chemical and biological fields that is similar to the spectrophotometer and has detection components needing to be cleaned in a nearly non-destructive manner.

In the present invention, the term "cleaning" refers to making the component or portion to be cleaned (e.g., the component or portion in direct contact with the test sample) clean by removing dirt, sample residues, etc., but it does not require that the dirt, sample residues, etc. are completely removed. In addition, "cleaning" within the meaning of the present invention not only includes removing dirt, sample residues, etc., but also may include other auxiliary steps in cooperation with the primary cleaning step, including but not limited to various pre-treatment steps or posttreatment steps such as blow-dry.

In the present invention, the term "measurement" is not limited to the measurement of the test substance, but can encompass further operations such as analysis of test results and signal transmission. In other words, in the present invention, units, devices, components, equipment, etc., which are named after functions, are intended to implement at least the functions, but are not limited to implementing other functions. The term "unit" is not limited to a physical device that implements a given function, but may also include non-physical devices such as software and models.

The spectrophotometer 100 according to the present invention includes a measurement unit 110. The measurement unit 110 is configured to measure the absorbance of a test sample. The measurement unit 110 may include pair of detection components. Here, "a pair of' means that the pair of detection components cooperate with each other functionally, but it does not require that the pair of detection components must be consistent with each other in shape, size, and alignment. In the present invention, depending on the specific type of the spectrophotometer 100, the pair of detection components may be in direct contact with or in non-contact with the test sample. The detection component that is in direct contact with the test sample has greater cleaning requirements because the test sample will remain on the detection component, but this does not mean that non-contact detection component does not need to be cleaned.

In a preferred embodiment, the spectrophotometer 100 is a micro-spectrophotometer 100. A trace amount of the test sample, especially in the form of droplets, can be held between the pair of detection components under the action of surface tension. In this way, an optical path running through the test sample can be established between the pair of detection components, mainly between the two surfaces thereof in contact with the test sample. The test sample held between the pair of detection components may also be referred to as a sample column.

In a specific example, the pair of detection components may be optical fiber probes. Each optical fiber probe may include a transmitting optical fiber and a receiving optical fiber, which are held in respective optical fiber jackets 118 to prevent an optical fiber 116 from being damaged. When the test sample is located between the pair of optical fiber probes, light for measuring the absorbance, such as ultraviolet light, may be emitted from the transmitting optical fiber, pass through an optical path including the test sample, and reach the receiving optical fiber, so that the absorbance of the test sample is obtained through the signal generated by the receiving optical fiber.

However, it should be noted that in the present invention, the pair of detection components are preferably disposed opposite each other to hold the test sample between the detection components, but this is not necessary. For example, the pair of detection components may also be located on the same side of the test sample. In this case, it is necessary to arrange an optical reflection device, such as a mirror, on the opposite side of the test sample, so as to establish an optical path from a light-transmitting end to a light-receiving end. The optical paths in other forms, such as a differential path, are also within the scope of the present invention.

In the present invention, the spectrophotometer 100 may have various configurations. Here, the term "configuration" may refer to a state of the spectrophotometer 100 in order to achieve different main functions, in this state at least some devices or components of the spectrophotometer 100 may be at positions corresponding to the implementation of the main function, and the position is usually predetermined, but it is not excluded that the position may be changed according to actual conditions (e.g., replacement of devices or components, test samples, etc.). It should be understood that "in a position of..." may refer to movement to the position, but may also refer to having been in the position and not moving there, and whether each device or component needs to move to the position may be different.

For example, the spectrophotometer 100 may have a testing configuration in which the pair of detection components are in positions suitable for testing of a test sample, such as being at an appropriate predetermined distance from each other. In addition to the position, the pair of detection components may also enter an operating state to implement the testing function, for example, the transmitting optical fiber probe can transmit light, the receiving optical fiber probe can receive light passing through the test sample, etc. As another example, the spectrophotometer 100 may have a cleaning configuration in which the pair of detection components can be cleaned. Advantageously, the spectrophotometer 100 may have a cleaning configuration after the testing configuration, but one cleaning configuration may also be provided after multiple testing configurations. It should be understood that the spectrophotometer 100 includes a controller which is configured to control various configurations or states, for example, can control various operations of the pair of detection components and a cleaning unit mentioned below. The controller may be independent, but may also be integrated with a master controller of the spectrophotometer 100.

In the present invention, the pair of detection components can move relatively. For example, in the pair of detection components, a first detection component 112 (e.g., a transmitting optical fiber probe) may move relative to a second detection component 114 (e.g., a receiving optical fiber probe). Here, the term "relative motion" may include the two components both moving, such as moving toward or away from each other, and may also include one of the two components being stationary while the other being moving.

For example, when the spectrophotometer 100 is in the testing configuration, the first detection component 112 and the second detection component 114 can move relatively, for example, can move to enable the test sample to form a liquid column between the detection components under the action of tension. For another example, when the spectrophotometer 100 is in the cleaning state or configuration (described in further detail below), the first detection component 112 and the second detection component 114 may also move relatively to a predetermined position or an appropriate position to provide an appropriate space for cleaning the detection components. Alternatively, the first detection component 112 may move relative to the second detection component 114, while the second detection component 114 remains stationary, for example, remains unchanged from the position of the second detection component in the previous testing configuration. In one example, at least one of the first detection component 112 and the second detection component 114 may move to be at a distance of 1,000 microns from each other, but other values of distance may also be conceivable.

The measurement unit 110 according to the present invention may also include other components or devices, in addition to the pair of detection components, for analysis, signal transmission, or driving and powering the detection components, which are not the focus of the present invention and will not be repeated herein.

In order to clean the detection components of the spectrophotometer 100, the spectrophotometer 100 further includes a cleaning unit 120. The cleaning unit 120 and the pair of detection components may form a cleaning chamber 121, and the pair of detection components may be cleaned in the cleaning chamber 121. It should be understood that "cleaning in the cleaning chamber 121" means that the portions of the pair of detection components that are most in need of cleaning, such as the portions that are in direct contact with the test sample, are exposed to the inside of the cleaning chamber 121 to facilitate cleaning by the cleaning agent.

Specifically, the cleaning chamber 121 may include a wall to bound the cleaning chamber, and the cleaning unit 120 and the pair of detection components may form the wall of the cleaning chamber 121. Here, the term "forming a wall of..." means that at least a portion of the wall of the cleaning chamber 121 may be formed by the cleaning unit 120 and the pair of detection components, for example, may be composed of only the cleaning unit and the pair of detection components (which is preferred to use existing components to achieve a compact structure), but may also be composed of other components or parts of the measurement unit 110, such as a portion of the mirror mentioned above. In the present invention, the term "wall" refers to any entity that forms the outer perimeter of the cleaning chamber, including, for example, flexible or rigid entities, transparent or opaque entities, etc.

In the present invention, the cleaning chamber 121 may be closed. Here, the term "closed" does not mean that the cleaning chamber 121 is completely gas-tight, but primarily means that the cleaning chamber 121 is substantially liquid-tight, especially that the cleaning agent does not substantially flow out of the cleaning chamber 121 unexpectedly (but it is expected that the injection and discharge of the cleaning agent are allowed, for example, the injection port and the discharge port may be retained, but this does not affect the closed characteristics of the cleaning chamber in an operating state). The cleaning chamber 121 may be a complete chamber, or may include a plurality of chamber portions, but the chamber portions are in fluid communication with each other. The present invention does not exclude the situation in which during the process of discharging the cleaning agent, the blow-dry gas, or a mixture thereof, air may be drawn from outside of the cleaning chamber 121 into the cleaning chamber 121 and discharged from the cleaning chamber 121 together.

In the present invention, when the cleaning chamber 121 starts to function, for example, when a cleaning agent or other pretreatment substances, such as air, can be injected into the cleaning chamber 121, the position in which the cleaning unit 120 is located may be referred to as a position in which the cleaning chamber 121 is formed (i.e., a position in which the wall of the cleaning chamber is formed) or simply referred to as a cleaning position. The position is generally unchanged for a certain spectrophotometer 100, especially for certain pair of detection components, but can be changed with the replacement of the spectrophotometer 100, especially with the replacement of the pair of detection components.

It should be noted that the position of the cleaning unit 120 where the cleaning chamber 121 is formed, or the cleaning position, is irrelevant to whether other components, mainly the pair of detection components, that form the wall of the cleaning chamber 121 together with the cleaning unit have been in place (here, the term "in place" means that the detection components enter the predetermined position in which the wall of the cleaning chamber 121 is formed), unless the spectrophotometer 100, especially the detection component itself, is changed as described above. That is, "in the cleaning position, the cleaning unit 120 can form a closed cleaning chamber 121 with the pair of detection components" means "can form", rather than "in the cleaning position, the cleaning unit 120 and the pair of detection components have formed a closed cleaning chamber 121". In addition, the expression "for forming" in the present invention means that it is expected to form

(the wall of) the cleaning chamber 121, but does not mean that it is only configured to form the cleaning chamber 121, and also does not mean that the cleaning chamber 121 is only formed therefrom.

The cleaning unit 120 according to the present invention may include an injection mechanism and a discharge mechanism. In the present invention, the object injected into the cleaning chamber 121 by the injection mechanism may include a cleaning agent (e.g., a cleaning liquid) and other auxiliary substances, such as gas (especially air) for blow-dry the detection components. The object discharged from the cleaning chamber 121 by the discharge mechanism may be a cleaning agent, other substances (e.g., gas), or a mixture thereof (e.g., a gas-liquid mixture).

By injecting the cleaning agent into the cleaning chamber 121, effective cleaning of the detection components can be implemented without damaging the detection components, especially the surfaces of the optical fiber probes, as would be caused by a wipe, thereby significantly improving the durability of the detection components and the testing accuracy. The cleaning agent may be, for example, distilled water, purified water, deionized water, double distilled water, etc. The cleaning agent may be taken from a cleaning agent storage container 127a or directly from a flowing water pipe, etc.

According to the present invention, while the cleaning agent is injected into the cleaning chamber 121, the cleaning agent is discharged from the cleaning chamber 121. This means that the cleaning agent is discharged at least during the injection of the cleaning agent. For example, when no cleaning agent is injected into the cleaning chamber 121, the cleaning agent or a mixture of the cleaning agent and other substances (e.g., a gas-liquid mixture) that has been present in the cleaning chamber 121 may be discharged therefrom. However, it should be understood that at least when the cleaning agent is injected into the cleaning chamber 121, the cleaning agent should be discharged from the cleaning chamber 121 to prevent the cleaning agent from accumulating in the cleaning chamber 121 as much as possible or to reduce the risk of the cleaning agent leaking from the cleaning chamber 121 (although the cleaning chamber 121 is designed to be sealed, there may still be a risk of leakage). Therefore, the present invention is not limited to immediately discharging the cleaning agent upon injection into the cleaning chamber 121 (although this is also an implementation), but the cleaning agent may be discharged after the beginning of the injection of the cleaning agent, but the cleaning agent needs to be discharged at least during the injection process. As described above, the cleaning agent or other substances may be injected into the cleaning chamber 121 by means of the injection mechanism, and the cleaning agent, other substances or a mixture thereof may be discharged from the cleaning chamber 121 by means of the discharge mechanism.

In the cleaning configuration of the spectrophotometer 100, the cleaning unit 120 may be in, especially move into, a position in which the cleaning chamber 121 is formed. The movement of the corresponding part of the cleaning unit 120 to this position is advantageous in that the corresponding part of the cleaning unit 120 is not in this position in a non-cleaning configuration of the spectrophotometer 100, because this position may hinder the operation of the spectrophotometer 100 in other configurations, such as being unfavorable for testing the test sample. Therefore, the cleaning unit 120 advantageously moves to a position in which the cleaning chamber is formed 121 only in a cleaning configuration or another configuration related to cleaning. As described above, whether the cleaning unit 120 is in the position in which the cleaning chamber is formed 121 is irrelevant to whether other devices or components for forming the wall of the cleaning chamber 121 are also in place, and only whether the cleaning unit 120 itself is in this position is discussed.

In a preferred embodiment, the injection mechanism and the discharge mechanism may each include a corresponding part for forming a portion of the closed cleaning chamber 121. In the cleaning configuration of the spectrophotometer 100, the corresponding parts of the injection mechanism and the discharge mechanism may both move to the position in which the cleaning chamber 121 is formed, for example, move toward each other, but one of them can remain stationary while the other moves, but the latter is not preferred.

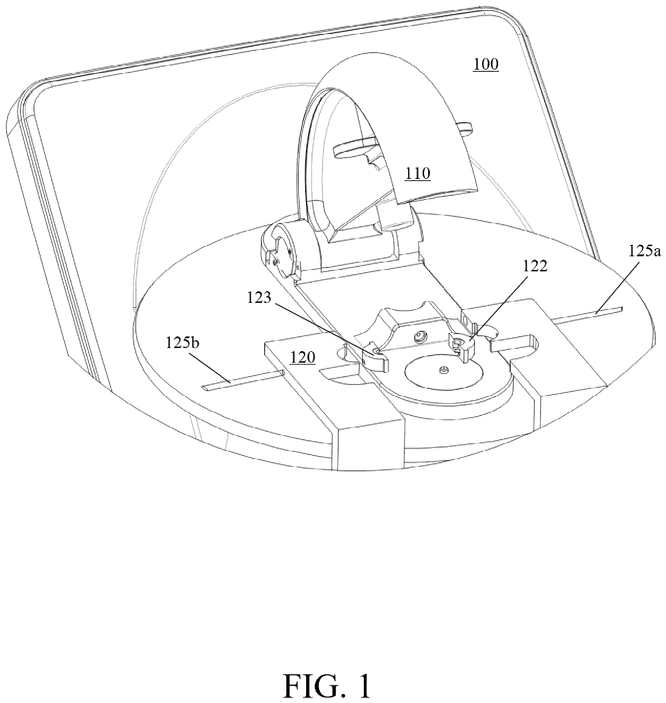

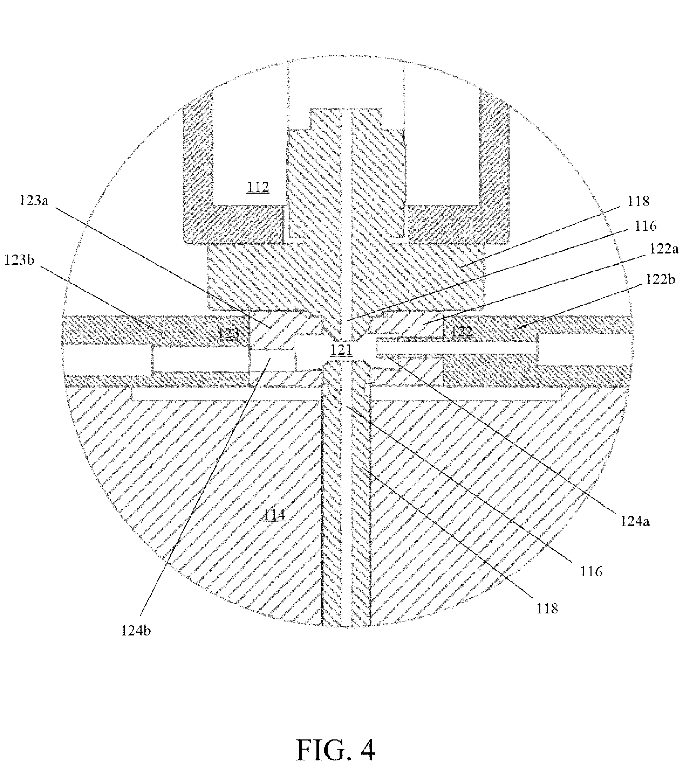

For example, the injection mechanism may include a first cleaning component 122, and the discharge mechanism may include a second cleaning component 123, as best shown in FIG. 1. In the cleaning configuration, the first cleaning component 122 and the second cleaning component 123 can move to the position in which the cleaning chamber 121 is formed, as best shown in FIG. 4. In the preferred embodiment, the wall for bounding the cleaning chamber 121 is only composed of the first cleaning component 122, the second cleaning component 123, and the pair of detection components (i.e., the first detection component 112 and the second detection component 114). More specifically, the portions of the pair of detection components for forming the wall of the cleaning chamber 121 each include the optical fiber 116 and a portion of the optical fiber jacket 118 disposed around the optical fiber 116, mainly outer surfaces facing each other (not limited to end surfaces). This embodiment is advantageous in that a portion of the wall of the cleaning chamber 121 is formed by the existing detection components, and the other portion of the wall of the cleaning chamber 121 is formed by the mechanisms for injecting and discharging the cleaning agent, without the need for other auxiliary devices specifically for forming the cleaning chamber 121, thereby making the structure of the spectrophotometer 100 compact.

The present invention also encompasses an integrated mechanism that is not divided into multiple components and can be directly configured to form a portion of the wall of the cleaning chamber 121, for example, in cooperation with the pair of detection components. The integrated mechanism may move into position when the spectrophotometer 100 is in the cleaning configuration. Of course, the cleaning unit 120 having more than two components, for example, three or four components, for forming a portion of the wall of the cleaning chamber 121 is also within the scope of the present invention.

In order to form the closure better, the first cleaning component 122 and the second cleaning component 123 may include flexible portions 122a, 123a, respectively. The flexible portion is made of rubber, polymer, etc., and has a rigidity significantly smaller than that of the pair of detection components. The detection component, such as the optical fiber jacket 118, may be made of metal. The flexible portions 122a, 123a can better engage (e.g., better "hold tightly") at least a portion of the outer surface of each of the pair of detection components, so that the flexible portions 122a, 123a can form a portion of the wall bounding the cleaning chamber 121.

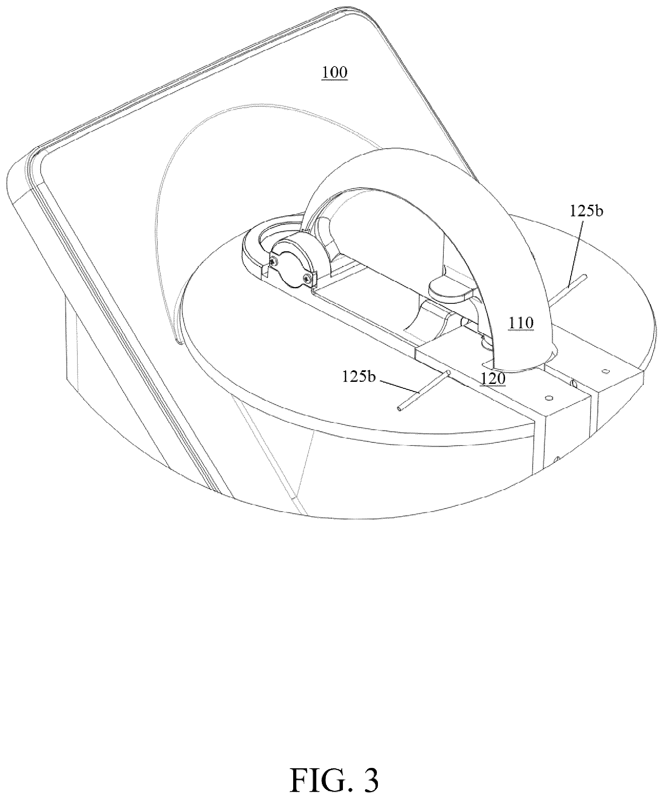

As shown in FIG. 4, the flexible portions 122a and 123a of the first cleaning component 122 and the second cleaning component 123 may engage with the side surfaces of the pair of detection components from the sides (but not limited thereto, they may each also engage with a portion of the end surface of the detection component). The flexible portions 122a, 123a can "enclose" the pair of detection components (to the position shown in FIG. 3) so as to fully fit onto the outer surfaces of the detection components. However, in the present invention, the range of engagement between the cleaning unit 120 (e.g., the respective flexible portions 122a, 123a of the first cleaning component 122 and the second cleaning component 123) and the outer surfaces of the pair of detection components may be various, and is not limited to the range and engagement position shown in FIG. 4, as long as their engagement can form the closed cleaning chamber 121.

FIG. 3 shows the spectrophotometer 100 that has been in a cleaning configuration, in which the cleaning components have been moved to the position in which the cleaning chamber 121 is formed, and the pair of detection components have also been in the position in which the cleaning chamber 121 is formed. In other words, the cleaning component and the detection component are both in the position in which (the wall of) the cleaning chamber 121 is formed. Specifically, the first cleaning component 122 and the second cleaning component 123 have engaged with the pair of detection components, such as the optical fiber probes, so as to form the closed cleaning chamber 121, as best shown in FIG. 4. Advantageously, the second detection component 114, such as the receiving optical fiber probe, can move from a position away from the (final) cleaning chamber 121 (see FIG. 1) to a position in which the second detection component engages with the first cleaning component 122 and the second cleaning component 123, that is, a position closer to the first detection component 112, such as the transmitting optical fiber probe.

An injection port and a discharge port 124b, which are in fluid communication with the cleaning chamber 121, may both be provided at corresponding parts of the cleaning unit 120 that form a portion of the wall of the cleaning chamber 121. In the case of an integrated mechanism, an injection port and a discharge port 124b may be provided thereon. In the case of the cleaning unit 120 including a first cleaning component 122 and a second cleaning component 123, it is advantageous that an injection port that can be in fluid communication with the cleaning chamber 121 is provided on the flexible portion 122a of the first cleaning component 122, and a discharge port 124b that can be in fluid communication with the cleaning chamber 121 is provided on the flexible portion 123a of the second cleaning component 123.

Preferably, the injection port and the discharge port 124b may be arranged oppositely with respect to the cleaning chamber 121, that is, located on opposite sides of the cleaning chamber 121. More preferably, the injection port and the discharge port 124b are arranged substantially horizontally. Most preferably, the injection port and the discharge port 124b are approximately 180 degrees opposite each other and at least partially overlap in height.

In addition, it is preferred that the pair of detection components may be arranged oppositely with respect to the cleaning chamber 121, that is, located on opposite sides of the cleaning chamber 121. More preferably, the pair of detection components, such as the transmitting optical fiber probe and the receiving optical fiber probe, are arranged substantially vertically.

It should be understood that, in the present invention, the cleaning agent or other substances can directly flow into the cleaning chamber 121 via the injection port, but can also flow into the cleaning chamber 121 through other elements disposed at the injection port. Therefore, the function of the injection port is at least to provide fluid communication between the outside and the cleaning chamber 121. For example, in the embodiment shown in FIG. 4, the first cleaning component 122 may include an injection pipe 124a extending into the cleaning chamber 121 via an injection port, and a cleaning agent or other substance, such as air, can flow into the cleaning chamber 121 through the injection pipe 124a rather than directly through the injection port. Using the separate injection pipe 124a is advantageous in that the cleaning agent can flush, wash, clean, etc. the detection component to be cleaned in a manner closer to the detection component to be cleaned.

Similarly, the cleaning agent, other substances or a mixture thereof may directly flow out of the cleaning chamber 121 via the discharge port 124b, but may also be discharged from the cleaning chamber 121 by means of other elements disposed at the discharge port 124b. In a particularly advantageous embodiment, it is conceivable to use a discharge element extending into the cleaning chamber 121 via the discharge port 124b, and the discharge element may cause the cleaning agent to form, within the cleaning chamber 121, certain vortex that enhances the cleaning effect. In particular, such a discharge element may also match the position of the injection pipe 124a, so that the cleaning agent always follows a favorable cleaning path from the entry of the cleaning agent to the exit from the cleaning chamber 121.

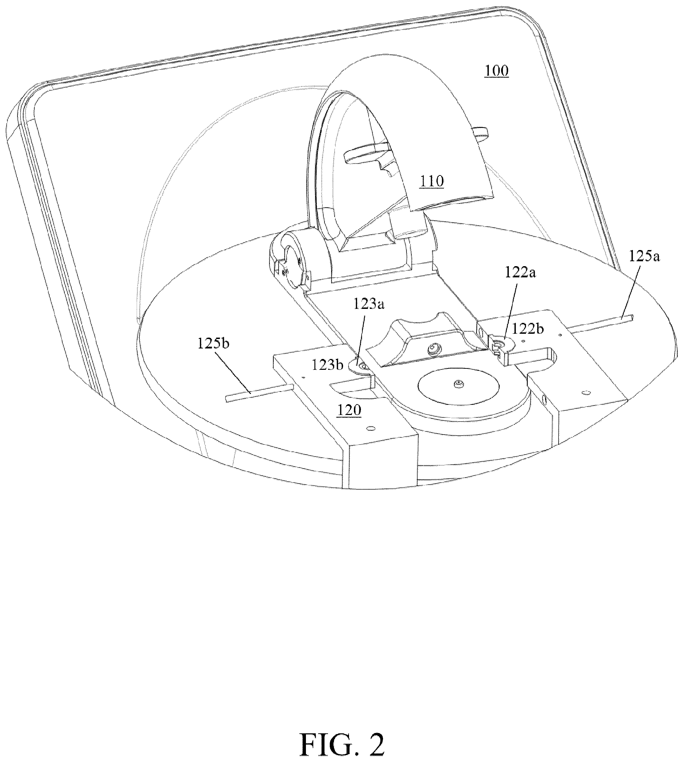

In some embodiments, the first cleaning component 122 and the second cleaning component 123 of the cleaning unit 120 may include, in addition to the flexible portions 122a and 123a, more rigid portions (also referred to as supporting portions 122b and 123b) which are adjacent to the flexible portions 122a and 123a and may be connected to a mechanism for actuating the movement of the cleaning unit 120 so as to facilitate easy operation. The more rigid portion may include features, such as recesses or protrusions, that fit in shape with the flexible portions 122a, 123a. FIG. 2 shows the flexible portions 122a, 123a that have been embedded in the supporting portions 122b, 123b, and the flexible portions 122a, 123a can be pushed into a cleaning position by means of the supporting portions 122b, 123b. As shown in FIGS. 1 and 2, the supporting portions may each be formed as a flat plate that can move on a support of the spectrophotometer 100, but this is not a restrictive structure.

Of course, in the present invention, it is also conceivable that the first cleaning component 122 is not divided into multiple portions including the flexible portions 122a, 123a and the supporting portions 122b, 123b, but only includes an integral component that not only forms a portion of the wall of the cleaning chamber 121 but is also connected to the actuating mechanism. In the embodiment shown in FIG. 4, the injection pipe 124a extends from the supporting portion 122b of the first cleaning component 122 adjacent to the flexible portion 122a.

In order to better ensure that the cleaning agent does not unexpectedly leak from the cleaning chamber 121, for example, from the non-discharge port 124b, the discharge mechanism is preferably configured to have a suction speed from the cleaning chamber 121 greater than an injection speed of the cleaning agent into the cleaning chamber 121 by the injection mechanism. Here, the discharge mechanism may discharge, from the cleaning chamber 121, not only the cleaning agent but also a mixture including the cleaning agent, such as a mixture of the cleaning agent and air. Therefore, the term "suction speed" refers to the speed at which substances (e.g., the cleaning agent, gas such as air, a gas-liquid mixture of the cleaning agent and gas, etc.) are drawn from the cleaning chamber 121, and does not necessarily refer to the discharge flow rate at which the cleaning agent leaves the cleaning chamber 121.

In particular, the suction speed may be two to five times the injection speed (of the cleaning agent) so as to ensure that there is no leakage of the cleaning agent. In some embodiments, the cross-sectional size of the injection port may be only one-half to one-tenth of the discharge port 124b so as to facilitate rapid discharge of the cleaning agent. For example, the injection port has a diameter about 200 microns, and the discharge port 124b has a diameter about 1000 microns.

In a preferred embodiment, the cleaning agent may be pressurized and then injected into the cleaning chamber 121 so as to improve the cleaning power and cleaning efficiency. However, it should be noted that the pressure should be set to a level that will not damage the detection components, such as the optical fiber probes. In some embodiments, the pressure of the cleaning agent may be provided by a pump, i.e., the flow rate of the pump determines the pressure of the injected cleaning agent.

In addition to cleaning the pair of cleaning components, such as the optical fiber probes, with the cleaning agent, gas, such as air, especially heated air, may be injected into the cleaning chamber 121 to dry the cleaned cleaning surface faster. Therefore, the cleaning unit 120 may be configured to supply gas to the cleaning chamber 121 after the injection of the cleaning agent into the cleaning chamber 121 is stopped, so as to dry the pair of detection components. Here, it should be noted that "after the injection of the cleaning agent" refers to the time period during which the cleaning agent is no longer injected into the cleaning chamber 121, but at this time there may still be part of the cleaning agent to be discharged from the cleaning chamber 121, which does not affect the blowing of the blow-dry gas into the cleaning chamber 121. To this end, the cleaning unit 120 according to the present invention may include a gas supply mechanism for supplying a blow-dry gas. The gas supply mechanism may be shared with part of the elements or flow paths in the injection mechanism for injecting the cleaning agent, or may be a completely independent mechanism.

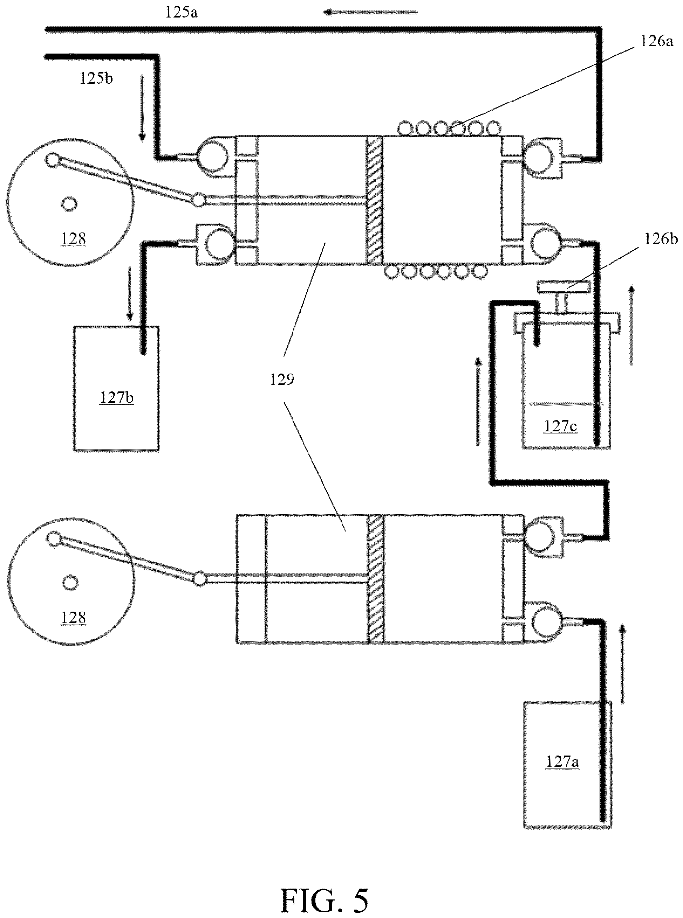

FIG. 5 shows an exemplary configuration of a cleaning unit 120 according to the present invention. The cleaning agent may first be delivered from the cleaning agent storage device 127a into the injection line 125a by means of a pump or a cylinder 129 driven by a motor 128, and the injection line 125a is connected to the injection port or injection pipe 124a. Other devices, such as a filter device, a pressurizing device, etc., may be arranged on the flow path from the cleaning agent container to the injection line 125a. The flow path for supplying the blow-dry gas may overlap, partially overlap, or not overlap with the flow path for injecting the cleaning agent (i.e., a flow path in communication with the injection port or the injection pipe 124a is independently provided). Advantageously, a heating device 126a for heating the gas may be provided on the flow path for supplying the blow-dry gas, so as to improve the rapid blow-dry effect.

FIG. 5 also shows a specific example in which the cleaning agent may be first quantitatively drawn into a quantitative container 127c, and when the cleaning agent in the quantitative container 127c is completely removed, air can then be directly drawn. When air is drawn, the air can pass through the filter device 126b and then flow into the injection line. In this embodiment, there is no need to provide separate flow paths for air and the cleaning agent, and the air and the cleaning agent share the same pump, motor, cylinder and other elements.

In order to discharge the cleaning agent or a mixture of the cleaning agent and other substances, such as blow-dry air, from the cleaning chamber 121, the discharge mechanism may be provided with a pump, a cylinder 129 driven by a motor 128, or other similar devices. Preferably, one cylinder can be used to pump in the cleaning agent or the gas and pump out the cleaning agent or the mixture, as shown in FIG. 5. Alternatively, the controller may also be used to control the timing (i.e., the time point), duration, etc. of injection and discharge of the cleaning agent. The cleaning agent discharged from the cleaning chamber 121 may be delivered into a waste storage container 127b via a discharge line 125b.

Next, a method for cleaning a spectrophotometer 100 according to the present invention is illustrated exemplarily.

As shown in FIG. 1, the spectrophotometer 100 has not yet entered a cleaning configuration. The spectrophotometer 100 may be in, for example, a testing configuration, but may not be in the testing configuration. In the embodiment of FIG. 1, the second detection component 114 is away from the first detection component 112, and the measurement unit 110 of the spectrophotometer 100 is in an open state.

The cleaning method according to the present invention includes: moving at least a cleaning unit 120 to a cleaning position (i.e., a position in which a cleaning chamber 121 is formed). In the cleaning position, the cleaning unit 120 can form a closed cleaning chamber 121 with pair of detection components, so that the pair of detection components can be cleaned in the cleaning chamber 121. In a preferred embodiment, the first cleaning component 122 (which may be part of the injection mechanism) and the second cleaning component 123 (which may be part of the discharge mechanism) of the cleaning unit 120 move toward each other to a cleaning position in which the cleaning components engage with at least one of the pair of detection components. More preferably, the flexible portions 122a, 123a in the first cleaning component 122 and the second cleaning component 123 directly engage to the outer surface of the first detection component 112, so as to sandwich the first detection component from the sides. However, in the present invention, it may also be conceivable that a non-multi-piece cleaning component engages with the pair of detection components to form a closed cleaning chamber 121.

During the period of time from the movement of the cleaning unit 120 to the cleaning position until the cleaning agent starts to be injected into the cleaning chamber 121, the first cleaning component 122 and the second cleaning component 123 generally maintain their positions unchanged (unchanged at the macro level). Before forming the final closed cleaning chamber 121, one of the pair of detection components, for example, the second detection component 114 (e.g., a receiving optical fiber probe), may not move to a position in which the cleaning chamber 121 is formed, for example, away from the first detection component 112. In this case, one of the pair of detection components may move toward the other, as shown in FIGS. 1 and 2. The relative movement may be accomplished by an actuating mechanism of the measurement unit 110, such as a motor. Therefore, in some embodiments, the first cleaning component 122 and the second cleaning component 123 may be in place before one of the pair of detection components (in place at the macro level), but alternatively, the pair of detection components may first be in place (in place at the macro level), and the first cleaning component 122 and the second cleaning component 123 are in place later, that is, engage to both of the pair of detection components that are in place, typically to portions of their outer surfaces.

In some advantageous embodiments, in order to achieve better engagement of the first cleaning component 122 and the second cleaning component 123 to the pair of detection components, one of the pair of detection components or at least one of the first cleaning component 122 and the second cleaning component 123 may be subjected to fine adjustment after forming the closed cleaning chamber 121, so as to achieve an optimal fit. Such fine adjustment is not the case of being out of position at the macro level described above, but is an adjustment of extremely small distance (micron-scaled) on the basis of having been in position.

After the closed cleaning chamber 121 is formed, the cleaning agent may be injected into the cleaning chamber 121. The cleaning agent may be injected into the cleaning chamber 121 in a pressurized manner, for example, via an injection port or an injection pipe 124a. At the beginning or a short period of time after the cleaning agent is injected, the discharge mechanism of the cleaning unit 120 starts to discharge the cleaning agent from the cleaning chamber 121. In order to completely remove the cleaning agent, the discharge mechanism may also maintain its suction force after the injection mechanism stops injecting the cleaning agent into the cleaning chamber 121, so as to discharge the residual cleaning agent from the cleaning chamber 121.

In order to blow-dry the pair of detection components in the cleaning chamber 121 as quickly as possible, gas, especially air, may be supplied to the cleaning chamber 121 after the injection of the cleaning agent into the cleaning chamber 121 is stopped. The gas may also be heated before being injected into the blow-dry gas (as shown in FIG. 5) so as to blow-dry the pair of detection components more quickly. At this point, the discharge mechanism may be configured to still provide suction force such that the blow-dry gas or the gas-liquid mixture with the cleaning agent is discharged from the cleaning chamber 121 through the discharge port 124b. It should be understood that there may be a pre-treatment step before injecting the cleaning agent, such as blowing gas or injecting other substances that facilitates the functioning of the cleaning agent. However, in any case, the discharge mechanism should ensure that no liquid is accumulated in the cleaning chamber 121, thereby reducing the risk of liquid leaking out and thus affecting the normal operation of the spectrophotometer 100.

Although various embodiments of the present invention are described in the accompanying drawings with reference to various examples based on a structure of a micro-spectrophotometer including an optical fiber probe, it should be understood that embodiments within the scope of the present invention may be applied to spectrophotometers with similar structures and/or functions, their cleaning units, and methods of cleaning spectrophotometers, and even to other application scenarios similar to spectrophotometers that require cleaning high-precision detection components.

The foregoing description presents numerous features and advantages, including various alternative embodiments, and details of the structure and function of apparatus and methods. This disclosure is intended to be exemplary, not exhaustive or limiting.

It will be apparent to those skilled in the art that various modifications may be made within the full scope indicated by the broad general meaning of the terms expressed in the appended claims, especially in terms of structures, materials, elements, components, shape, size and arrangement of components, including the combination of these aspects within the scope of the principles described herein. To the extent that these various modifications do not depart from the spirit and scope of the appended claims, it is intended that they are also included herein.

## Claims

1. A spectrophotometer, comprising:
a measurement unit (110) including a pair of detection components;
wherein the spectrophotometer (100) further comprises:
a cleaning unit (120) including an injection mechanism and a discharge mechanism;
a closed cleaning chamber (121), wherein a wall for bounding the cleaning chamber (121) is formed by the pair of detection components and the cleaning unit (120), and the pair of detection components are cleaned in the cleaning chamber (121);
wherein the discharge mechanism is configured to discharge a cleaning agent from the cleaning chamber (121) when the injection mechanism injects the cleaning agent into the cleaning chamber (121).

2. The spectrophotometer according to claim 1, wherein the injection mechanism includes a first cleaning component (122), and the discharge mechanism includes a second cleaning component (123), the spectrophotometer (100) has a cleaning configuration in which the first cleaning component (122) and the second cleaning component (123) can move to a position for forming the cleaning chamber.

3. The spectrophotometer according to claim 2, wherein the first cleaning component (122) and the second cleaning component (123) include a flexible portion, respectively, which can engage to at least a portion of an outer surface of the pair of detection components and form a portion of the wall bounding the cleaning chamber (121).

4. The spectrophotometer according to claim 3, wherein the flexible portion of the first cleaning component (122) is provided with an injection port which can be in fluid communication with the cleaning chamber (121), and the flexible portion of the second cleaning component (123) is provided with a discharge port (124b) which can be in fluid communication with the cleaning chamber (121).

5. The spectrophotometer according to claim 4, wherein the injection port and the discharge port (124b) are arranged oppositely with respect to the cleaning chamber (121), and/or the pair of detection components are arranged oppositely with respect to the cleaning chamber (121).

6. The spectrophotometer according to claim 4, wherein the first cleaning component (122) further includes an injection pipe (124a) extending into the cleaning chamber (121) via the injection port, and the cleaning agent can flow into the cleaning chamber (121) through the injection pipe (124a).

7. The spectrophotometer according to any one of claims 1-6, wherein the discharge mechanism is configured such that a suction speed from the cleaning chamber (121) is greater than an injection speed of the cleaning agent into the cleaning chamber (121) by the injection mechanism.

8. The spectrophotometer according to claim 7, wherein the suction speed is two to five times the injection speed.

9. The spectrophotometer according to any one of claims 1-6, wherein the cleaning unit (120) includes a gas supply mechanism, which is configured to supply a gas for drying the pair of detection components to the cleaning chamber (121).

10. The spectrophotometer according to any one of claims 1-6, wherein the pair of detection components includes an optical fiber transmitting probe and an optical fiber receiving probe, and in the cleaning configuration, at least one of the optical fiber receiving probe and the optical fiber transmitting probe can move to a position for forming the cleaning chamber (121).

11. The spectrophotometer according to any one of claims 3-6, wherein the pair of detection components are arranged substantially vertically, and the first cleaning component (122) and the second cleaning component (123) are be arranged substantially horizontally and engage with the pairs detection components from sides.

12. A cleaning unit for a spectrophotometer, wherein the spectrophotometer (100) comprises a measurement unit (110) including a pair of detection components, wherein the cleaning unit (120) includes an injection mechanism and a discharge mechanism, the cleaning unit (120) and the pair of detection components form a closed cleaning chamber (121) to enable the pair of detection components to be cleaned in the cleaning chamber (121), wherein the discharge mechanism is configured to discharge a cleaning agent from the cleaning chamber (121) when the cleaning agent is injected into the cleaning chamber (121) by the injection mechanism.

13. A method for cleaning a spectrophotometer (100) comprising a measurement unit (110) and a cleaning unit (120), the measurement unit including a pair of detection components, wherein the method comprises:
moving the cleaning unit (120) to a cleaning position in which the cleaning unit (120) can form a closed cleaning chamber (121) with the pair of detection components, so that the pair of detection components can be cleaned in the cleaning chamber (121);
discharging a cleaning agent from the cleaning chamber (121) when the cleaning agent is injected into the cleaning chamber (121).

14. The method according to claim 13, wherein the method further comprises: after the injection of the cleaning agent into the cleaning chamber (121) is stopped, supplying gas into the cleaning chamber (121) to dry the pair of detection components.

15. The method according to claim 13 or 14, wherein the method further comprises: before the injection of the cleaning agent into the cleaning chamber (121), moving at least one of the pair of detection components to a position for forming the cleaning chamber (121).
